(19) **Europäisches Patentamt / European Patent Office / Office européen des brevets**

(11) **EP 4 075 652 B1**

(12) **EUROPEAN PATENT SPECIFICATION**

(45) Date of publication and mention
of the grant of the patent:
**31.07.2024 Bulletin 2024/31**

(21) Application number: **21168334.7**

(22) Date of filing: **14.04.2021**

(51) International Patent Classification (IPC):
*H02M 1/32* *(2007.01)*     *H02M 7/5387* *(2007.01)*
*B60L 3/00* *(2019.01)*     *H02M 1/08* *(2006.01)*
*H02P 27/06* *(2006.01)*

(52) Cooperative Patent Classification (CPC):
**H02M 1/32; B60L 3/003; H02M 1/08; H02M 7/5387;**
**H02M 7/797; H02P 27/06; H02P 29/024;**
B60L 2220/14; B60L 2240/527

(54) **INVERTER CIRCUIT FOR AN ELECTRICAL AC MOTOR, ELECTRICAL DRIVE AND METHOD FOR CONTROLLING AN ELECTRICAL DRIVE**

WECHSELRICHTERKREIS FÜR EINEN ELEKTRISCHEN WECHSELSTROMMOTOR, ELEKTRISCHER ANTRIEB UND VERFAHREN ZUR STEUERUNG EINES ELEKTRISCHEN ANTRIEBS

CIRCUIT D'INVERSEUR POUR UN MOTEUR ÉLECTRIQUE CA, ENTRAÎNEMENT ÉLECTRIQUE ET PROCÉDÉ DE COMMANDE D'UN ENTRAÎNEMENT ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.10.2022 Bulletin 2022/42**

(73) Proprietor: **Hitachi Energy Ltd**
**8050 Zürich (CH)**

(72) Inventors:
• **Mesemanolis, Athanasios**
  **8404 Winterthur (CH)**
• **Maleki, Milad**
  **5417 Untersiggenthal (CH)**
• **Ruiz, Antoni**
  **5600 Lenzburg (CH)**

(74) Representative: **Epping - Hermann - Fischer Patentanwaltsgesellschaft mbH Schloßschmidstraße 5 80639 München (DE)**

(56) References cited:
**EP-A1- 3 496 249          EP-A1- 3 496 250**
**WO-A1-2011/139269          CN-A- 108 075 622**
**CN-A- 109 130 864          CN-A- 112 627 994**
**DE-A1- 102010 006 525     JP-A- 2020 198 764**
**US-A1- 2009 001 915        US-A1- 2013 181 731**
**US-A1- 2017 093 323        US-A1- 2019 137 347**
**US-B2- 10 389 262          US-B2- 10 622 933**
**US-B2- 9 548 675**

## Description

The present disclosure relates to an electrical drive comprising an inverter circuit, at least one AC motor with permanent magnets controlled by the inverter circuit, and an emergency response unit. The present disclosure further relates to a method for controlling an electrical drive, and an electric vehicle.

Document EP 0 742 637 A1 relates to a method and device for safe braking of an electrical drive. Using a clock control signal, the reaction speed and braking duration can be optimized.

Document CN 109 130 864 A relates to a low-voltage power-off protection circuit for an electric vehicle, comprising a first power supply circuit comprising a series drive circuit and a diode, wherein the first power supply circuit extracts power from a battery of an electric vehicle, and supplies a required voltage to a fault-resistant active short-circuit system of the electric vehicle in a state where an output voltage of the battery is greater than or equal to a predetermined value; and a second power supply circuit including a low-voltage power-down detecting circuit in series, a direct current intermediate circuit and a diode, wherein the second power supply circuit extracts power from the battery of the electric vehicle, and supplies a required voltage to the fault-resistant active short-circuit system of the electric vehicle in a state where the output voltage of the battery is smaller than a predetermined value. The second power supply circuit extracts power from the battery of the electric vehicle. As that battery voltage is low than 12V, the invention can stably output 15V direct current, so that the anti-fault active short circuit (ASC) strategy is in the working state, and the magnetic excitation overvoltage is avoided from damaging the controller and the motor.

Document US 2019/137347 A1 relates to a temperature monitoring for switching elements, in particular for a module having bipolar transistors with an insulated gate. For this purpose, the current operating parameters of the IGBT module are detected and, on the basis of said operating parameters, an expected temperature of the switching element is determined at a predetermined position. Said expected temperature is compared with a temperature detected at this position. If the actual temperature exceeds the expected temperature, then this is an indication of a malfunction.

Document WO 2011/139269 A1 relates to a converter module for a variable speed drive having a semiconductor device for precharge. The precharge circuit includes switching modules, one switching module with a first semiconductor switch connected in parallel or series with a second semiconductor switch. The second semiconductor switch is switched on and off during the precharge operation in order to limit the inrush current into the DC Link. After the precharge operation, the second semiconductor switch is turned on all the time and acts like a diode.

Document US 2013/181731 A1 relates to a discharge test for an inverter. In the discharge test, while a first control signal for putting a first switching element into a low resistance state is being applied to a first switching element, a second control signal increasing a voltage thereof over time is applied to a second switching element, and application of one of or both of the first and second control signals is stopped when a current detector detects a current. Since a discharge test ends when a limited discharge current starts flowing, stress associated with the discharge test is reduced.

Document US 2017/093323 A1 relates to an inverter control device for controlling a rotating electric machine drive device that includes an inverter and a DC link capacitor, the inverter being connected to a DC power supply via a contactor, being connected to an alternating current rotating electric machine, and performing power conversion between direct current and three-phase alternating current, an arm for each alternating current phase being formed by a series circuit including an upper side switching element and a lower side switching element, and the DC link capacitor smoothing a DC link voltage, which is a DC-side voltage of the inverter, the inverter control device performing switching control on the switching elements that form the inverter.

Document EP 2 747 260 A2 relates to a method for operating an electrical power rectifier. The power rectifier comprises at least two branches that are connected in parallel to each other, each of said branches comprising at least two power semiconductor elements that are connected in series. The collector-emitter voltage and/or the collector current of one of the power semiconductor elements is detected by means of the method. If at least one of three specific conditions is met, the gate-emitter voltage of at least one of the power semiconductor elements is increased.

Document US 2009/001915 A1 provides methods and apparatus for dynamic voltage control of electric motors. An inverter provides an output voltage to an electric motor based on a gate voltage. The method includes determining a speed of the electric motor and modifying the gate voltage based on the speed of the electric motor. The apparatus includes a gate drive circuit and a controller coupled to the gate drive circuit. The gate drive circuit provides a gate voltage to a switch network, and the switch network produces the output voltage in response to the gate voltage. The controller modifies the gate voltage based on a speed of the electric motor.

Document CN 108 075 622 A provides a gate drive control method and device of a power converter, a controller and a current converter. The control method comprises the following steps of obtaining output current of the power converter; judging whether the output current is smaller than or equal to a preset adjusting threshold value; when the output current is larger than the preset adjusting threshold value, controlling a switching power supply of a gate to output standard voltage; when the output current is smaller than or equal to the preset adjusting threshold value, controlling the switching power supply of the gate to output target adjusting voltage, wherein the target adjusting voltage is larger than the standard voltage.

DE 10 2010 006525 A1 relates to a device for diverting surge currents or transient overvoltage switch a switching stage and a switching element. The switching stage is set up to cause the switching element to switch on when an overvoltage or a current surge is detected. The switching element is a semiconductor switching element that can be turned off again, the switching on being achieved by operating the switching element outside of the specified parameters.

Document US 10,389,262 B2 provides a device for the on-demand commutation of an electrical current from a first line branch to another, second line branch, which has a number of power semiconductor switching elements, which are arranged in series and/or parallel to one another in the second line branch, and a control unit for controlling the number of power semiconductor switching elements. The control unit is adapted to apply to each of the number of power semiconductor switching elements an increased control voltage (VGE) whose level is above the maximum permissible control voltage specified for continuous operation, in order to switch on or maintain the conduction of the number of power semiconductor switching elements and to cause an increased current flow through it, whose current rating is at least double the nominal operating current.

Documents EP 3 496 249 A1 and EP 3 496 250 A1 relate to an inverter, in particular for an electric machine, with a plurality of voltage-controlled switching elements and with a controller comprising a pulsing unit configured for operating the inverter in a pulsing mode in which sequences of a first voltage and a second voltage are applied to control terminals of the switching elements. The controller comprises a short circuit unit configured to put the switching elements into an active short circuit mode, if an operation in an active region is detected by the active region detection unit. In the active short circuit mode, the inverter is configured to apply to the control terminals of said group of switching elements a third voltage having a higher absolute value than the absolute value of the first voltage.

US 9 548 675 B2, US 10 622 933 B2, JP 2020 198764 A and CN 112 627 994 A deal with further circuit details of inverter circuits, in particular for providing various measures for protecting circuit components of an electric machine, such as discharging an DC voltage intermediate circuit, an overcurrent protection function, protecting a capacitor and auxiliary equipment from an overvoltage, and for realizing engine down-speed regulation using an active short circuit.

Embodiments of the disclosure relate to electrical drives and methods for controlling an electrical drive as defined in the attached claims, which are better suited to high power applications. For example, it is desirable to limit the thermal load on switching stages of an inverter circuit during abnormal operation states.

The invention is defined by the attached set of claims. Further details of the disclosed methods, devices and system are provided in the following, which are helpful for understanding the claimed invention.

According to a first aspect, an electrical drive comprising an inverter circuit for an electrical AC motor with permanent magnets according to claim 1 is provided.

By providing a short-term control voltage VGSelevated that exceeds a regular switch-on voltage VGSon, the internal resistance of the semiconductor switches can be reduced, resulting in a reduced energy dissipation in the semiconductor switches of the switching stages. This in turn leads to a lower thermal load on the switching stages and helps to sustain a current generated by the electrical motor over a longer time period.

According to the first aspect, a maximum transient voltage VGSmax specified for the first semiconductor switches or the second semiconductor switches is used as the short-term control voltage VGSelevated. Use of the maximum transient voltage VGSmax, e.g. a maximum voltage specified by the semiconductor switch manufacturer, has the advantage that it does not lead to a significantly reduction of the lifetime of the semiconductor switches.

According to at least one embodiment, the emergency control circuit is further configured to alternate between a first switching stage and a second switching stage. In the first switching stage, the short-term control voltage VGSelevated is provided to all of the first semiconductor switches, and in the second switching stage the short-term control voltage VGSelevated is provided to all of the second semiconductor switches. By alternating between activating the first and second semiconductor switches over time, the energy distribution can be spread over multiple semiconductor devices, thus further reducing the electrical and thermal load on individual switches.

The disclosed electrical drive can survive an abnormal operation state for a longer time period without the need to provide a stronger inverter circuit for a given motor power or to provide a smaller motor for a given inverter strength.

According to the claims, the electrical drive further comprises an emergency response unit, configured to be activated in case of an abnormal condition of the drive control circuit, the emergency response unit having a predetermined activation time, wherein the emergency control circuit is configured to provide the short-term control voltage VGSelevated to control gates of the first semiconductor switches or the second semiconductor switches during the predetermined activation time. Provision of a relatively slow emergency response unit, such as a braking device, a brake chopper or an isolation relay, in addition to a faster acting emergency control circuit allows the primary energy storage to be protected rapidly during the onset of an abnormal operation condition. At the same time, the emergency response unit takes further actions to protect the inverter circuit itself from damage resulting from relatively high currents generated by the temporarily uncontrolled permanent field excitation motor.

According to a second aspect, a method for controlling an electrical drive according to claim 11 is provided.

The devices and methods described above are suitable for high power applications, such as electrical drives of electrical vehicles or industrial equipment.

As detailed above, the present disclosure comprises several aspects of an invention. Every feature described with respect to one of the aspects is also disclosed herein with respect to the other aspects, even if the respective feature is not explicitly mentioned in the context of the specific aspect.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.

Figure 1 shows, in a schematic manner, an inverter circuit according to an embodiment of the present disclosure.

Figure 2 shows a circuit diagram of an electrical drive according to an embodiment of the present disclosure.

Figure 3 shows an output characteristic of a single semiconductor switching element.

Figure 4 shows an amount of energy dissipated over time by an inverter circuit.

Figure 5 shows, in a schematic manner, a flowchart of a method for controlling an electrical drive.

While the invention is amenable to various modifications and alternative forms, specifics thereof have been shown by way of example in the figures and will be described in detail. It should be understood, however, that the intention is not to limit the invention to the exemplary embodiments described. On the contrary, the intention is to cover all modifications, equivalents, and alternatives falling within the scope of the invention defined by the appended claims.

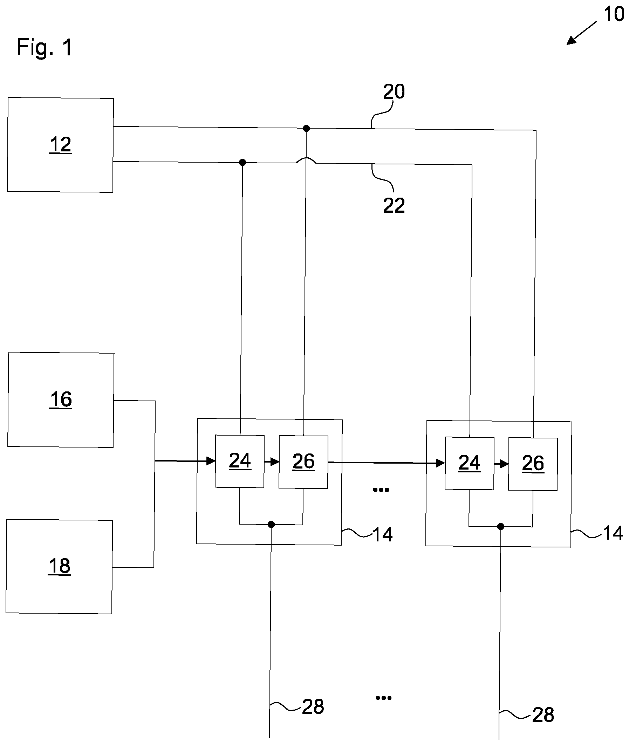

Figure 1 shows, in a schematic manner, an inverter circuit 10 according to an embodiment of the present disclosure. The inverter circuit 10 comprises a primary energy storage device 12, a plurality of switching stages 14, a drive control circuit 16 and an emergency control circuit 18.

As shown in Figure 1, terminals of the energy storage device 12 and each of the switching stages 14 are connected by two different supply lines 20 and 22 for providing a direct current. Each of the switching stages 14 comprises a first semiconductor switch 24 connected to the positive supply line 20 and a second semiconductor switch 26 connected to the negative supply line 22.

In a normal operation state, the drive control circuit 16 controls each one of the semiconductor switches 24 and 26 of each one of the switching stages 14 to generate a multi-phase AC signal for an external, electrical motor (not shown in Fig. 1), provided through a plurality of phase lines 28. For example, in the case that a three-phase motor is to be controlled by the inverter circuit 10, three phase lines 28 connected to three corresponding switching stages 14 are used. Similarly, in the case of a six-phase electrical motor, six switching stages 14 and six corresponding phase lines 28 are used. During normal operation of the inverter circuit 10, the emergency control circuit 18 remains passive. That is to say, no control signals are provided by the emergency control circuit 18, and its output terminals remain in a high impedance state.

While the inverter circuit 10 is operating, the emergency control circuit 18 monitors the provision of control signals by the drive control circuit 16. In the case of a fault of the drive control circuit 16, the emergency control circuit 18 takes over control of the switching stages 14 of the inverter circuit 10. For example, if the control circuit 16 provides no or irregular output signals, the emergency control circuit 18 will provide control signals for the first semiconductor switches 24 and the second semiconductor switches 26 of all switching stages 14. To avoid any damage to the semiconductor switches 24 and 26, in this emergency operating mode, also referred to as active short circuit (ASC) mode, all phase lines 28 are shortened, either by the set of all first semiconductor switches 24 or all second semiconductor switches 26. This is achieved by providing a short-term control voltage VGSelevated to control gates of the first or second semiconductor switches 24, 26 that exceeds a regular switch-on voltage VGSon provided to the control gates of the first or second semiconductor switches 24 or 26 by the drive control circuit 16 during normal operation of the inverter circuit 10.

Details of the inverter circuit 10 and its operation are explained below with regard to an electrical drive 30.

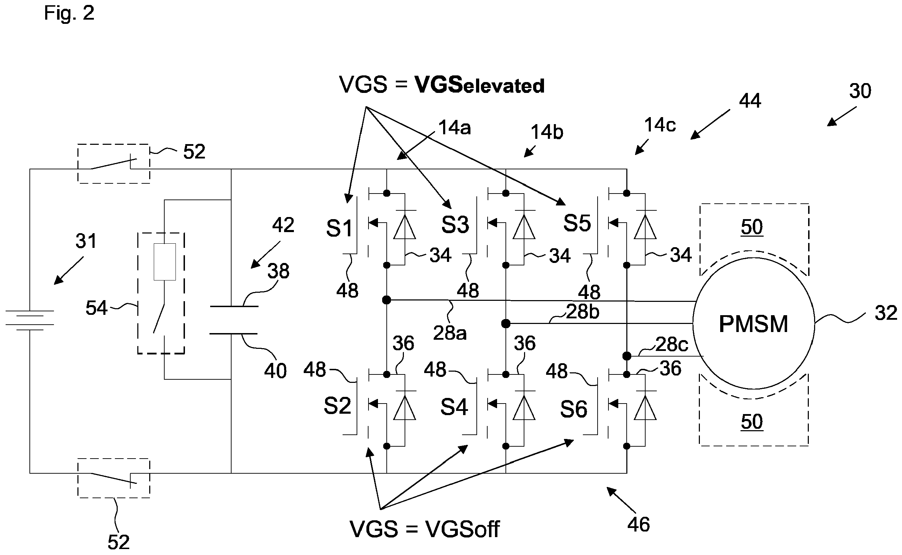

Figure 2 shows a circuit diagram of the electrical drive 30 comprising an inverter circuit 10 according to an embodiment of the present disclosure. In the described embodiment, the inverter circuit 10 of the electrical drive 30 comprises two energy storage devices, a battery 31, for example a rechargeable main battery of an electrical vehicle, and a direct current (DC) link capacitor 42 placed in electrical and physical proximity to the switching stages of the inverter circuit 10. The electrical drive 30 further comprises an alternating current (AC) motor 32 with permanent magnets such as an electrically commutated motor and/or a permanent field excitation motor. In the described embodiment, the AC motor 32 is an electric three-phase permanent-magnet synchronous motor (PMSM) connected to three switching stages 14a to 14c of the inverter circuit 10.

In the embodiment shown in Figure 2, each of the switching stages 14a to 14c comprises two n-channel MOSFETs 34 and 36 respectively (as an alternative MISFETs may exemplarily be used). The first, in Figure 1 upper, n-channel MOSFET 34 of each of the stages 14a to 14c is connected in series with the second, in Figure 2 lower, n-channel MOSFET 36 of the same stage between a positive terminal 38 and a negative terminal 40 of a DC link capacitor 42. Each one of three phase lines 28a to 28c of the three-phase AC motor 32 is connected between the first MOSFET 34 and the second MOSFET 36 of one of the three switching stages 14a to 14c, respectively. Together, the first n-channel MOSFETs 34 of the three switching stages 14a to 14c form a positive half-bridge 44 of the inverter circuit 10. Correspondingly, the second n-channel MOSFETs 36 of the three switching stages 14a to 14c form a negative half-bridge 46 of the inverter circuit 10.

During normal operation of the electrical drive 30, switches S1 to S6 of the inverter circuit 10 provided by the MOSFETs 34 and 36, respectively, are controlled by a drive control circuit (not shown in Figure 2) by selectively switching on individual switches as required to provide a desired torque of the AC motor 32. For this purpose, each one of the phase lines 28a to 28c can be selectively connected to the positive terminal 38 or the negative terminal 40 of the DC link capacitor 42 and/or another primary energy storage device, such as the battery 31. Suitable methods for the control of a three-phase AC motors 32 are known from the prior art and are therefore not described in detail here. In essence, a rotating electrical field is created within the electrical motor to control the speed and torque of its rotor as desired.

To switch on one of the switches S1 to S6, a specific gate-source signal or voltage VGS, in the following referred to as switch-on voltage VGSon, is provided to a terminal 48 of the respective switch. Inversely, to deactivate one of the switches, a second, typically lower gate-source signal VGS, referred to as switch-off voltage VGSoff is provided to the respective gate terminal 48. Depending on the type of the semiconductor switch used, the specific voltages may differ. For example, for the n-channel MOSFETs 34 and 36 shown in Figure 2, VGSon corresponds to a voltage of +15 V, and VGSoff corresponds to a voltage of -4 V with respect to a reference potential such as electrical ground. However, other semiconductor switching elements may also be used. For example, in the case that IGBTs are used as switching elements, the switch-on voltage VGSon usually corresponds to +15 V and the switch-off voltage VGSoff corresponds to -15 V. Typically, such values are specified by the manufacturer of a given semiconductor switch.

If a fault occurs in the electrical drive 30, for example a fault in the drive control circuit 16 used to control the gate terminals 48 of the switches S1 to S6, the general control electronic of the electrical drive 30, or some other unexpected event, such as a lack of feedback within the control circuitry, the AC motor 32 will typically be free-spinning, and therefore act as a generator for the circuit shown in Figure 2. In a controlled mode of operation, a current generated by the free-spinning AC motor 32 can be used to recharge the DC link capacitor 42 or other primary energy storage devices to recuperate some of the kinetic energy of the system as electrical energy. For example, for an electrical vehicle, controlled braking of the vehicle may be used to recharge a rechargeable main battery of the vehicle through controlled operation of the inverter circuit 10.

However, if no gate-source voltage VGS is provided to the switches S1 to S6, the inverter circuit 10 by default will enter a state where all the MOSFETs 34 and 36 are turned off. In this case, the rotating energy of the motor will flow through the body diodes of the MOSFETs 34 and 36 or, in case IBGTs are used as switches S1 to S6, through their antiparallel diodes, and will start charging the DC link capacitor 42 and/or other primary energy storage device 10, such as the battery 31. This is a non-desired behavior because of a danger of overstressing the DC link capacitor 42 or charging the battery 31 with an overcurrent. Thus, in the case that the inverter circuit 10 cannot be controlled in a suitable manner, an emergency control circuit (not shown in Figure 2) will take over control of the switches S1 to S6 to avoid an unacceptably high load current to the DC link capacitor 42 and/or battery 31.

For this purpose, all semiconductor switches of one of the positive or negative half-bridges 44 or 46 are activated together, effectively forming a short-circuit between the phase lines 28a to 28c of the AC motor 32. In this way, the rotating energy of the AC motor 32 at the time of the fault is transformed into heat on the switches S1 to S6 and dissipated at a cooling system of the inverter circuit 10.

In the example shown in Figure 2, all first n-channel MOSFETs 34 are activated by providing a short-term control voltage VGSelevated to the gate terminals 48 of high-side switches S1, S3 and S5. In the described example, a maximum transient voltage allowed by the individual manufacturer of the MOSFETs 34, referred to as VGSmax, is used. This has the advantage that it does not reduce the lifetime of the semiconductor switches. Using a significantly higher gate control voltage could result in overstressing the gates of the n-channel MOSFETs 34. At the same time, a switch-off voltage VGSoff is provided to the gate terminals 48 of the second n-channel MOSFETs 36 corresponding to low-side switches S2, S4 and S6. However, as detailed later, it is also possible to activate the switches of the negative half-bridge 46 and open the switches of the positive half-bridge 44.

In this ASC mode of operation, a relatively high current flows from the respective phase lines 28 of the AC motor 32 through the MOSFETs 34 in a short-circuit, resulting in a high energy dissipation and thus heating of the semiconductor body of each one of the MOSFETs 34. If the MOSFETs 34 temperature rises above a certain level, destruction of the semiconductor chip will occur due to the elevated temperature. The capability of the MOSFETs 34 and by extension, the inverter circuit 10, to survive such an ASC event is given by the maximum energy which the MOSFETs 34 can sustain. The energy dissipated by the MOSFETs 34 during the ASC event of time duration *t1* is given by

$$E_{ASC} = \int_0^{t1} RDSon \, I^2 dt$$

. A typical duration of an ASC event is in the order of tens of milliseconds, e.g. the time it takes for regaining control or stopping the drive 30 by other means as detailed below.

To reduce the internal channel resistance RDSon of the MOSFETs 34, the short-term control voltage VGSelevated provided to the gates 48 of the MOSFETs 34 during the relatively short ASC event is increased with respect to the normal switch-on voltage VGSon. For example, in the described embodiment, a control voltage of 19 V is used, which is 4 V or around 25 % higher than the typical switch-on voltage of 15 V.

It is noted that the specific value of the short-term control voltage VGSelevated to be used in the ASC mode may differ depending on the type of semiconductor switch used. For many commercially available semiconductor switches, a maximum allowable peak voltage or maximum transient voltage VGSmax for short-term provision to the gate terminal 48 may be specified by the respective manufacturer and is used as the short-term control voltage VGSelevated.

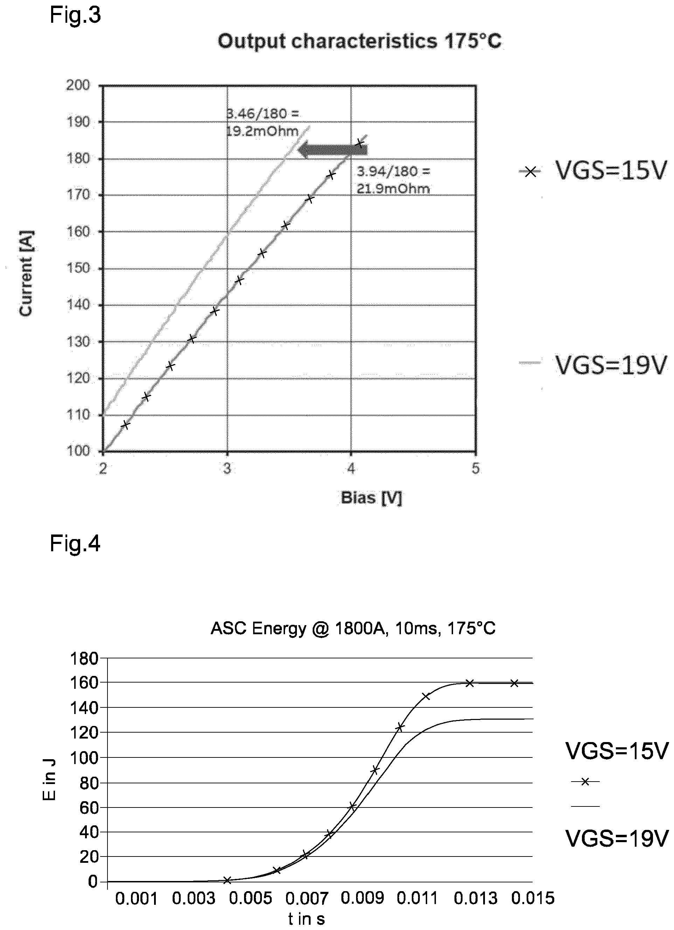

The effects of such a control method is shown in Figures 3 and 4. Figure 3 shows the output characteristic of a single semiconductor switch for two different gate control voltages, i.e. 15 V and 19 V. Taking a 750 V SiC MOSFET as an example, it can be seen that, for the same current flowing through the semiconductor switch, the voltage drop or bias voltage between the source and drain terminals of the respective switch is lower for the higher control gate supply. For example, the channel resistance RDSon for a current of 180 A is reduced from 21.9 Q to 19.2 Q, an improvement by 14 %. This also gives a 14 % margin to the current part of the equation above, because the maximum energy is depending on the MOSFET chip geometry and therefore remains the same. Decreasing the channel resistance RDSon by 14 % allows the ASC event current to increase to $\sqrt{1.14} = 1.068$ or 6.8 % for a given amount of energy that can be safely dissipated by the switching component. In this context, it is noted that a free-spinning AC motor with permanent magnets essentially acts as a current source. Thus, increasing a gate control voltage for a given speed of the AC motor 32 will result in a reduction of energy being dissipated in the channel region of the corresponding semiconductor switch. The amount of energy that can be safely dissipated by a semiconductor switch during a short-term event, such as an ASC event, may also be specified by the manufacturer, allowing to safely dimension the components of the electrical drive 30.

This is shown in more detail in Figure 4, showing the total amount of energy being dissipated in the inverter circuit 10 during an ASC event. In the example, the ASC event results in a current of 1800 A and last for 10 ms. After this time, other means of control take over as described in further detail below.

After detection of the loss of control at t=0 ms, the emergency control circuit 18 quickly activates corresponding semiconductor switches 24 or 26 by the provision of a corresponding control voltage to the control gates 48 of high-side switches S1, S3 and S5, leading to a rapid increase of a current through these switches. At t=10 ms, the high-side switches S1, S3 and S5 are deactivated again, leading to a decrease of a current through these switches. Note that there is a time lag for both events, caused by the accumulation of charge carriers in a channel of the respective semiconductor switches. The energy $E_{ASC}$ being absorbed by the inverter circuit 10 is limited to a value determined by the maximum current and length of the ASC event. This energy level differs, depending on the provided gate voltage. In the described example, in case the gate terminals 48 of high-side switches S1, S3 and S5 are biased with 19 V, the inverter circuit 10 absorbs an energy $E_{ASC}$ of 130 J during the ASC event. In case the gate terminals 48 of high-side switches S1, S3 and S5 are biased with 15 V, the inverter circuit 10 absorbs an energy $E_{ASC}$ of 160 J during the ASC event, i.e. 30 J or 23 % more energy.

Coming back to the circuit diagram of Figure 2, the electrical drive 30 comprises further components to avoid any damage on the components of the inverter circuit 10 caused by a prolonged operation of the inverter circuit 10 in the ASC mode. While the ASC emergency mode is very fast to respond, as shown in Figure 4, it does not provide a long-term solution for the control of the AC motor 32 in the case that the normal drive control circuit 16 cannot be reactivated quickly. Accordingly, the electrical drive 30 comprises further components, such as a mechanical brake 50 which can be used to stop the electrical AC motor 32. Alternatively or in addition, one or several isolation relays 52 may be used to permanently disconnect the switching stages 14a to 14c from the battery 31 to avoid any damage to it, for example by overcharging. Moreover, a braking chopper 54 may be used to shorten the positive terminal 38 and the negative terminal 40 of the DC link capacitor 42 using a shunt resistor. Typically, the isolation relays 52 are implemented as electromechanical relays and therefore have higher activation times than the semiconductor switches formed by the MOSFETs 34 or 36. Moreover, the energy dissipated by the inverter circuit 10 can also be distributed over different switch groups as detailed below.

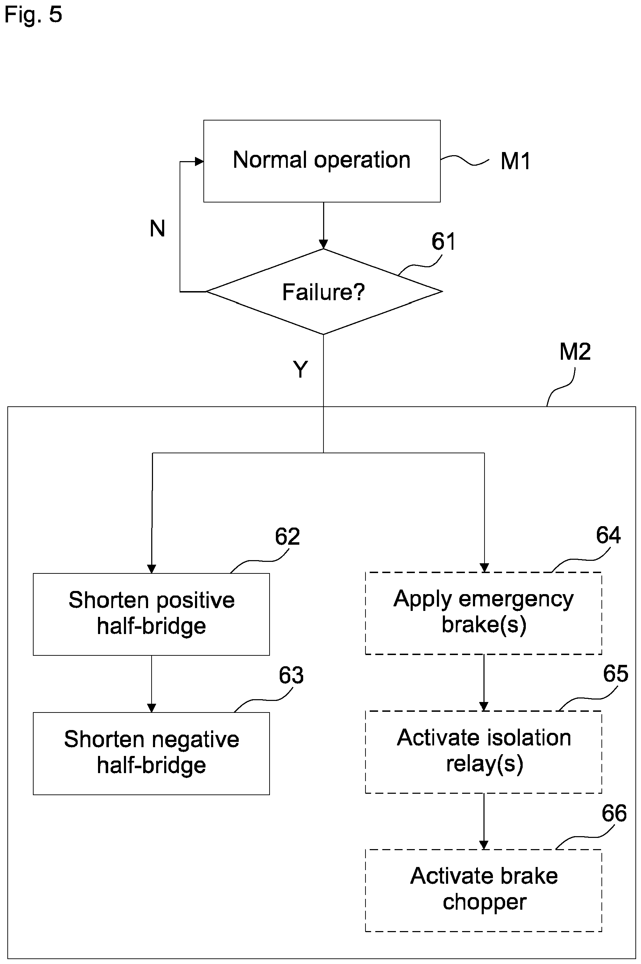

Figure 5 shows a flowchart of a method for operating the electrical drive 30. Initially, the electrical drive 30 is operated in a normal operation mode M1. In case a failure during normal operation is detected in step 61, the drive unit 30 switches to an ASC mode M2 of operation, wherein an emergency control circuit 18 takes over control of the inverter circuit 10.

In the example shown in Figure 4, in a step 62, all first semiconductor switches 24 of a positive half-bridge 44 are shortened to avoid a feedback of a high current to a primary energy storage device 12. At the same time, the second semiconductor switches 26 of a negative half-bridge 46 are switched off to electrically separate the primary energy storage device 12 from the AC motor 32. This state is maintained for a predetermined amount of time, for example a few milliseconds, e.g. 2 to 5 ms. Thereafter, to avoid overheating of the first semiconductor switches 24, the second semiconductor switches 26 of the negative half-bridge 46 are shortened in a step 63 and the first semiconductor switches 24 of the positive half-bridge 44 are deactivated.

In steps 64, 65 and 66, one or more other emergency measures are taken by the emergency control circuit 18. For example, in step 64, a mechanical brake 50 may be employed to slow down the AC motor 32. Moreover, in a step 65, one or more isolation relays 52 may be controlled to physically disconnect a rechargeable battery 31 from the switching stages 14 of the inverter circuit 10. In a step 66, a braking chopper 54 may be used to electrically shorten terminals 38 and 40 of a DC link capacitor 42.

The embodiments shown in the Figures 1 to 5 as stated represent exemplary embodiments of the improved devices and methods for their operation. Therefore, they do not constitute a complete list of all embodiments according to the improved devices and methods. Actual devices and methods may vary from the embodiments shown in terms of their specific components, configurations, signals and processing steps, for example.

**Claims**

1. An electrical drive (30) comprising an inverter circuit (10), an electrical AC motor (32) with permanent magnets and an emergency response unit, wherein

   - the inverter circuit (10) is configured to control the electrical AC motor (32) and comprises:

     ○ a primary energy storage device (12);
     ○ a plurality of switching stages (14), each switching stage (14) comprising a first semiconductor switch (24) and a second semiconductor switch (26), the first semiconductor switches (24) connected between a first terminal of the primary energy storage device (12) and one of a plurality of phase lines (28) of the electrical AC motor (32) with permanent magnets, and the second semiconductor switches (26) connected between a second terminal of the primary energy storage device (12) and one of the plurality of phase lines (28) ;
     ○ a drive control circuit (16), configured to selectively switch the first semiconductor switches (24) and the second semiconductor switches (26) to control a torque of the electrical AC motor (32) during normal operation of the inverter circuit (10); and
     ○ an emergency control circuit (18), configured to monitor the provision of control signals by the drive control circuit (16), to remain passive during normal operation of the inverter circuit (10), to activate the emergency response unit in case of an abnormal condition of the drive control circuit (16), and to switch on all of the first semiconductor switches (24) by providing a short-term control voltage VGSelevated to control gates (48) of the first semiconductor switches (24), to electrically connect the phase lines (28) in case of the abnormal condition of the drive control circuit (16), and to switch off all of the second semiconductor switches (26) by providing a switch-off voltage VGSoff to the control gates (48) of all second semiconductor switches (26), wherein the short-term control voltage VGSelevated corresponds to a maximum transient voltage VGSmax specified for the first semiconductor switches (24) and the second semiconductor switches (26),

   - wherein the emergency response unit comprises at least one of a braking device, a brake chopper and an isolation relay and has a predetermined activation time; and
   - wherein the emergency control circuit (18) is faster acting than the relatively slow emergency response unit and configured to rapidly protect the primary energy storage device (12) during the onset of the abnormal condition of the drive control circuit (16) by providing the short-term control voltage VGSelevated during the predetermined activation time.

2. The electrical drive (30) of claim 1, wherein the short-term control voltage VGSelevated is 19 V and the regular switch-on voltage VGSon is 15 V.

3. The electrical drive (30) of claim 1 or 2, wherein the emergency control circuit (18) is configured,

   - in a first switching state during a first time period, to provide the short-term control voltage VGSelevated to the control gates (48) of all first semiconductor switches (24), and to provide the switch-off voltage VGSoff to the control gates (48) of all second semiconductor switches (26);

and

- in a second switching state during a second time period, to provide the short-term control voltage VGSelevated to the control gates (48) of all second semiconductor switches (26) and to provide the switch-off voltage VGSoff to the control gates (48) of all first semiconductor switches (24), the second time period following the first time period.

4. The electrical drive (30) of claim 3, wherein the emergency control circuit (18) is further configured to alternate between the first switching state and the second switching state.

5. The electrical drive (30) of any one of claims 1 to 4, wherein the primary energy storage device (10) comprises at least one of a DC link capacitor (42) or a rechargeable battery (31) configured for storing electrical energy recuperated during deceleration of the electrical AC motor (32) during normal operation of the inverter circuit (10).

6. The electrical drive (30) of any one of claims 1 to 5, wherein the first semiconductor switches (24) and the second semiconductor switches (26) comprise at least one of MISFETs, MOSFETs or IGBTs (36, 34) having a maximum allowed gate voltage exceeding the switch-on voltage VGSon.

7. The electrical drive (30) of any one of claims 1 to 6, wherein the emergency response unit comprises the braking device, configured for slowing down the AC motor (32).

8. The electrical drive (30) of any one of claims 1 to 7, wherein the primary energy storage device (10) comprises a rechargeable battery (31) and the emergency response unit comprises the electromechanical isolation relay, configured for electrically isolating the rechargeable battery (31) from the plurality of switching stages (14).

9. The electrical drive (30) of any one of claims 1 to 8, wherein the primary energy storage device (10) comprises a DC link capacitor (42) and the emergency response unit comprises the braking chopper (54), configured for electrically shortening a positive terminal (38) and a negative terminal (40) of the DC link capacitor (42) using a shunt resistor.

10. The electrical drive (30) of any one of claims 1 to 9, wherein the AC motor (32) comprises at least one of an electrically commutated motor, a permanent field excitation motor, and a permanent-magnet synchronous motor (PMSM).

11. A method for controlling an electrical drive (30), comprising:

- in a normal operating mode M1, selectively controlling by a drive control circuit (16), at least one of first semiconductor switches (24) and second semiconductor switches (26) of a first half-bridge (44) and a second half-bridge (46) of an inverter circuit (10), respectively, to control an AC motor (32) with permanent magnets of the electrical drive (30);
- monitoring, by an emergency control circuit (18) of the electrical drive (30), the provision of control signals by the drive control circuit (16), wherein the emergency control circuit (18) remains passive during normal operation of the inverter circuit (10); and
- in case a failure of the drive control circuit (16) is detected during normal operation, switching the electrical drive (30) to an active short circuit, ASC, mode M2 of operation, wherein the emergency control circuit (18) takes over control of the inverter circuit (10), comprising:

  ∘ activating an emergency response unit comprising at least one of a braking device, a brake chopper and an isolation relay, the emergency response unit having a predetermined activation time, wherein the emergency control circuit (18) is faster acting than the relatively slow emergency response unit;
  ∘ rapidly protecting an primary energy storage device (12) of the electrical drive (30) during the predetermined activation time at the onset of the abnormal condition by selectively switching on all of the first semiconductor switches (24) to electrically shorten phase lines (28) of the AC motor (32) and switching off all of the second semiconductor switches (26), wherein a short-term control voltage VGSelevated is provided to control gates (48) of the first semiconductor switches (24) and a switch-off voltage VGSoff is provided to the control gates (48) of the second semiconductor switches (26), wherein the short-term control voltage VGSelevated corresponds to a maximum transient voltage VGSmax specified for the first semiconductor switches (24) and the second semiconductor switches (26).

12. The method of claim 11, further comprising:

- electrically isolating or shortening the primary energy storage device (12) connected to a primary side of the inverter circuit (10) during the ASC mode M2.

**13.** The method of claim 12, wherein the primary energy storage device (10) comprises a rechargeable battery (31), the emergency response unit comprises at least one electromechanical isolation relay, and the method specifically comprises:

- electrically isolating the rechargeable battery (31) from the plurality of switching stages (14) using the electromechanical isolation relay.

**14.** The method of claim 12 or 13, wherein the primary energy storage device (10) comprises a DC link capacitor (42), the emergency response unit comprises a braking chopper (54), and the method specifically comprises:

- electrically shortening, by the braking chopper (54), a positive terminal (38) and a negative terminal (40) of the DC link capacitor (42) using a shunt resistor.

**15.** An electric vehicle comprising the electrical drive (30) of any one of claims 1 to 10.

**Patentansprüche**

**1.** Elektrischer Antrieb (30), umfassend eine Wechselrichterschaltung (10), einen elektrischen Wechselstrommotor (32) mit Permanentmagneten und eine Notreaktionseinheit, wobei

- die Wechselrichterschaltung (10) zum Steuern des elektrischen Wechselstrommotors (32) ausgelegt ist und Folgendes umfasst:

  ◦ eine primäre Energiespeichervorrichtung (12);
  ◦ mehrere Schaltstufen (14), wobei jede Schaltstufe (14) einen ersten Halbleiterschalter (24) und einen zweiten Halbleiterschalter (26) umfasst, die ersten Halbleiterschalter (24) zwischen einen ersten Anschluss der primären Energiespeichervorrichtung (12) und eine von mehreren Phasenleitungen (28) des elektrischen Wechselstrommotors (32) mit Permanentmagneten geschaltet sind und die zweiten Halbleiterschalter (26) zwischen einen zweiten Anschluss der primären Energiespeichervorrichtung (12) und eine der mehreren Phasenleitungen (28) geschaltet sind;
  ◦ eine Antriebssteuerschaltung (16), ausgelegt zum selektiven Schalten der ersten Halbleiterschalter (24) und der zweiten Halbleiterschalter (26), um ein Drehmoment des elektrischen Wechselstrommotors (32) während des normalen Betriebs der Wechselrichterschaltung (10) zu steuern; und
  ◦ eine Notsteuerschaltung (18), die dazu ausgelegt ist, die Bereitstellung von Steuersignalen durch die Antriebssteuerschaltung (16) zu überwachen, während des normalen Betriebs der Wechselrichterschaltung (10) passiv zu bleiben, im Fall eines anormalen Zustands der Antriebssteuerschaltung (16) die Notreaktionseinheit zu aktivieren und alle ersten Halbleiterschalter (24) einzuschalten, indem eine kurzzeitige Steuerspannung VGSelevated an Steuer-Gates (48) der ersten Halbleiterschalter (24) geliefert wird, um die Phasenleitungen (28) im Falle des anormalen Zustands der Antriebssteuerschaltung (16) elektrisch zu verbinden, und alle zweiten Halbleiterschalter (26) auszuschalten, indem eine Ausschaltspannung VGSoff an die Steuer-Gates (48) aller zweiten Halbleiterschalter (26) geliefert wird, wobei die kurzzeitige Steuerspannung VGSelevated einer maximalen transienten Spannung VGSmax entspricht, die für die ersten Halbleiterschalter (24) und die zweiten Halbleiterschalter (26) spezifiziert ist,

- wobei die Notreaktionseinheit mindestens eine Bremsvorrichtung und/oder einen Brems-Chopper und/oder ein Trennrelais umfasst und eine vorbestimmte Aktivierungszeit aufweist; und
- wobei die Notsteuerschaltung (18) schneller agiert als die relativ langsame Notreaktionseinheit und dazu ausgelegt ist, die primäre Energiespeichervorrichtung (12) während des Eintretens des anormalen Zustands der Antriebssteuerschaltung (16) durch Bereitstellen der kurzzeitigen Steuerspannung VGSelevated während der vorbestimmten Aktivierungszeit schnell zu schützen.

**2.** Elektrischer Antrieb (30) nach Anspruch 1, wobei die kurzzeitige Steuerspannung VGSelevated 19 V beträgt und die reguläre Einschaltspannung VGSon 15 V beträgt.

**3.** Elektrischer Antrieb (30) nach Anspruch 1 oder 2, wobei die Notsteuerschaltung (18) zu Folgendem ausgelegt ist:

- in einem ersten Schaltzustand während einer ersten Zeitdauer, Liefern der kurzzeitigen Steuerspannung VGSelevated an die Steuer-Gates (48) aller ersten Halbleiterschalter (24) und Liefern der Ausschaltspannung VGSoff an die Steuer-Gates (48) aller zweiten Halbleiterschalter (26); und

- in einem zweiten Schaltzustand während einer zweiten Zeitdauer, Liefern der kurzzeitigen Steuerspannung VGSelevated an die Steuer-Gates (48) aller zweiten Halbleiterschalter (26) und Liefern der Ausschaltspannung VGSoff an die Steuer-Gates (48) aller ersten Halbleiterschalter (24), wobei die zweite Zeitdauer auf die erste Zeitdauer folgt.

4. Elektrischer Antrieb (30) nach Anspruch 3, wobei die Notsteuerschaltung (18) ferner dazu ausgelegt, zwischen dem ersten Schaltzustand und dem zweiten Schaltzustand zu wechseln.

5. Elektrischer Antrieb (30) nach einem der Ansprüche 1 bis 4, wobei die primäre Energiespeichervorrichtung (10) einen Gleichstromzwischenkreis-Kondensator (42) und/oder eine wiederaufladbare Batterie (31) umfasst, ausgelegt zum Speichern elektrischer Energie, die während einer Verzögerung des elektrischen Wechselstrommotors (32) während des normalen Betriebs der Wechselrichterschaltung (10) rückgewonnen wird.

6. Elektrischer Antrieb (30) nach einem der Ansprüche 1 bis 5, wobei die ersten Halbleiterschalter (24) und die zweiten Halbleiterschalter (26) MISFETs und/oder MOSFETs und/oder IGBTs (36, 34) mit einer die Einschaltspannung VGSon übersteigenden maximal zulässigen Gate-Spannung umfassen.

7. Elektrischer Antrieb (30) nach einem der Ansprüche 1 bis 6, wobei die Notreaktionseinheit die Bremsvorrichtung umfasst, die zum Verlangsamen des Wechselstrommotors (32) ausgelegt ist.

8. Elektrischer Antrieb (30) nach einem der Ansprüche 1 bis 7, wobei die primäre Energiespeichervorrichtung (10) eine wiederaufladbare Batterie (31) umfasst und die Notreaktionseinheit das elektromechanische Trennrelais umfasst, das zum elektrischen Trennen der wiederaufladbaren Batterie (31) von den mehreren Schaltstufen (14) ausgelegt ist.

9. Elektrischer Antrieb (30) nach einem der Ansprüche 1 bis 8, wobei die primäre Energiespeichervorrichtung (10) einen Gleichstromzwischenkreiskondensator (42) umfasst und die Notreaktionseinheit den Brems-Chopper (54) umfasst, der zum elektrischen Kurzschließen eines positiven Anschlusses (38) und eines negativen Anschlusses (40) des Gleichstromzwischenkreiskondensators (42) unter Verwendung eines Shunt-Widerstands ausgelegt ist.

10. Elektrischer Antrieb (30) nach einem der Ansprüche 1 bis 9, wobei der Wechselstrommotor (32) einen elektrisch kommutierten Motor und/oder einen Permanentfelderregungsmotor und/oder einen Permanentmagnet - Synchronmotor (PMSM) umfasst.

11. Verfahren zum Steuern eines elektrischen Antriebs (30), umfassend:

    - in einem normalen Betriebsmodus M1, selektives Steuern, durch eine Antriebssteuerschaltung (16), von ersten Halbleiterschaltern (24) und/oder zweiten Halbleiterschaltern (26) einer ersten Halbbrücke (44) bzw. einer zweiten Halbbrücke (46) einer Wechselrichterschaltung (10), um einen Wechselstrommotor (32) mit Permanentmagneten des elektrischen Antriebs (30) zu steuern; und
    - Überwachen, durch eine Notsteuerschaltung (18) des elektrischen Antriebs (30), der Bereitstellung von Steuersignalen durch die Antriebssteuerschaltung (16), wobei die Notsteuerschaltung (18) während des normalen Betriebs der Wechselrichterschaltung (10) passiv bleibt; und
    - falls ein Ausfall der Antriebssteuerschaltung (16) während des normalen Betriebs detektiert wird, Schalten des elektrischen Antriebs (30) in einen Aktivkurzschluss- bzw. ASC-Betriebsmodus M2, wobei die Notsteuerschaltung (18) die Steuerung der Wechselrichterschaltung (10) übernimmt, umfassend:

        ◦ Aktivieren einer Notreaktionseinheit, die eine Bremsvorrichtung und/oder einen Brems-Chopper und/oder ein Trennrelais umfasst, wobei die Notreaktionseinheit eine vorbestimmte Aktivierungszeit aufweist, wobei die Notsteuerschaltung (18) schneller agiert als die relativ langsame Notreaktionseinheit;
        ◦ schnelles Schützen einer primären Energiespeichervorrichtung (12) des elektrischen Antriebs (30) während der vorbestimmten Aktivierungszeit bei Eintreten des anormalen Zustands durch selektives Einschalten aller ersten Halbleiterschalter (24), um Phasenleitungen (28) des Wechselstrommotors (32) elektrisch kurzzuschließen, und Ausschalten aller zweiten Halbleiterschalter (26), wobei eine kurzzeitige Steuerspannung VGSelevated an Steuer-Gates (48) der ersten Halbleiterschalter (24) geliefert wird und eine Ausschaltspannung VGSoff an die Steuergates (48) der zweiten Halbleiterschalter (26) geliefert wird, wobei die kurzzeitige Steuerspannung VGSelevated einer maximalen transienten Spannung VGSmax entspricht, die für die ersten Halbleiterschalter (24) und die zweiten Halbleiterschalter (26) spezifiziert ist.

12. Verfahren nach Anspruch 11, das ferner Folgendes umfasst:

- elektrisches Trennen oder Kurzschließen der primären Energiespeichervorrichtung (12), die während des ASC-Modus M2 mit einer Primärseite der Wechselrichterschaltung (10) verbunden ist.

13. Verfahren nach Anspruch 12, wobei die primäre Energiespeichervorrichtung (10) eine wiederaufladbare Batterie (31) umfasst, die Notreaktionseinheit mindestens ein elektromechanisches Trennrelais umfasst und das Verfahren insbesondere Folgendes umfasst:

- elektrisches Trennen der wiederaufladbaren Batterie (31) von den mehreren Schaltstufen (14) unter Verwendung des elektromechanischen Trennrelais.

14. Verfahren nach Anspruch 12 oder 13, wobei die primäre Energiespeichervorrichtung (10) einen Wechselstromzwischenkreiskondensator (42) umfasst, die Notreaktionseinheit einen Brems-Chopper (54) umfasst und das Verfahren insbesondere Folgendes umfasst:

- elektrisches Kurzschließen, durch den Brems-Chopper (54), eines positiven Anschlusses (38) und eines negativen Anschlusses (40) des Wechselstromzwischenkreiskondensators (42) unter Verwendung eines Shunt-Widerstands.

15. Elektrofahrzeug, das den elektrischen Antrieb (30) nach einem der Ansprüche 1 bis 10 umfasst.

**Revendications**

1. Entraînement électrique (30) comprenant un circuit onduleur (10), un moteur électrique CA (32) avec des aimants permanents et une unité de réponse d'urgence,

- le circuit onduleur (10) étant configuré pour commander le moteur électrique CA (32) et comprenant :

  ∘ un dispositif de stockage d'énergie primaire (12) ;
  ∘ une pluralité d'étages de commutation (14), chaque étage de commutation (14) comprenant un premier commutateur à semiconducteurs (24) et un deuxième commutateur à semiconducteurs (26), les premiers commutateurs à semiconducteurs (24) étant connectés entre une première borne du dispositif de stockage d'énergie primaire (12) et une d'une pluralité de lignes de phases (28) du moteur électrique CA (32) avec des aimants permanents, et les deuxièmes commutateurs à semiconducteurs (26) étant connectés entre une deuxième borne du dispositif de stockage d'énergie primaire (12) et une de la pluralité de lignes de phases (28) ;
  ∘ un circuit de commande d'entraînement (16), configuré pour commuter sélectivement les premiers commutateurs à semiconducteurs (24) et les deuxièmes commutateurs à semiconducteurs (26) pour commander un couple d'un moteur électrique CA (32) pendant un fonctionnement normal du circuit onduleur (10) ; et
  ∘ un circuit de commande d'urgence (18), configuré pour surveiller la fourniture de signaux de commande par le circuit de commande d'entraînement (16), pour rester passif pendant un fonctionnement normal du circuit onduleur (10), pour activer l'unité de réponse d'urgence en cas de condition anormale du circuit de commande d'entraînement (16), et pour activer tous les premiers commutateurs à semiconducteurs (24) en fournissant une tension de commande court-terme VGSelevated à des grilles de commande (48) des premiers commutateurs à semiconducteurs (24), pour connecter électriquement les lignes de phases (28) en cas de condition anormale du circuit de commande d'entraînement (16), et pour désactiver tous les deuxièmes commutateurs à semiconducteurs (26) en fournissant une tension de désactivation VGSoff aux grilles de commande (48) de tous les deuxièmes commutateurs à semiconducteurs (26), la tension de commande court-terme VGSelevated correspondant à une tension transitoire maximale VGSmax spécifiée pour les premiers commutateurs à semiconducteurs (24) et les deuxièmes commutateurs à semiconducteurs (26),

- l'unité de réponse d'urgence comprenant au moins un parmi un dispositif de freinage, un hacheur de frein et un relais d'isolement et ayant un temps d'activation prédéterminée ; et
- le circuit de commande d'urgence (18) agissant plus rapidement que l'unité de réponse d'urgence relativement lente et étant configuré pour protéger rapidement le dispositif de stockage d'énergie primaire (12) pendant le début de la condition anormale du circuit de commande d'entraînement (16) en fournissant la tension de commande court-terme VGSelevated pendant le temps d'activation prédéterminé.

**2.** Entraînement électrique (30) selon la revendication 1, la tension de commande court-terme VGSelevated étant de 19 V et la tension d'activation régulière VGSon étant de 15 V.

**3.** Entraînement électrique (30) selon la revendication 1 ou 2, le circuit de commande d'urgence (18) étant configuré,

- dans un premier état de commutation pendant une première période de temps, pour fournir la tension de commande court-terme VGSelevated aux grilles de commande (48) de tous les premiers commutateurs à semiconducteurs (24), et pour fournir la tension de désactivation VGSoff aux grilles de commande (48) de tous les deuxièmes commutateurs à semiconducteurs (26) ; et
- dans un deuxième état de commutation pendant une deuxième période de temps, pour fournir la tension de commande court-terme VGSelevated aux grilles de commande (48) de tous les deuxièmes commutateurs à semiconducteurs (26) et pour fournir la tension de désactivation VGSoff aux grilles de commande (48) de tous les premiers commutateurs à semiconducteurs (24), la deuxième période de temps suivant la première période de temps.

**4.** Entraînement électrique (30) selon la revendication 3, le circuit de commande d'urgence (18) étant en outre configuré pour alterner entre le premier état de commutation et le deuxième état de commutation.

**5.** Entraînement électrique (30) selon l'une quelconque des revendications 1 à 4, le dispositif de stockage d'énergie primaire (10) comprenant un condensateur de liaison CC (42) et/ou une batterie rechargeable (31) configuré(e) pour stocker de l'énergie électrique récupérée pendant la décélération du moteur électrique CA (32) pendant un fonctionnement normal du circuit onduleur (10).

**6.** Entraînement électrique (30) selon l'une quelconque des revendications 1 à 5, les premiers commutateurs à semiconducteurs (24) et les deuxièmes commutateurs à semiconducteurs (26) comprenant des MISFET et/ou des MOSFET et/ou des IGBT (36, 34) ayant une tension de grille maximale autorisée dépassant la tension d'activation VGSon.

**7.** Entraînement électrique (30) selon l'une quelconque des revendications 1 à 6, l'unité de réponse d'urgence comprenant le dispositif de freinage, configuré pour ralentir le moteur CA (32).

**8.** Entraînement électrique (30) selon l'une quelconque des revendications 1 à 7, le dispositif de stockage d'énergie primaire (10) comprenant une batterie rechargeable (31) et l'unité de réponse d'urgence comprenant le relai d'isolement électromécanique, configuré pour isoler électriquement la batterie rechargeable (31) de la pluralité d'étages de commutation (14).

**9.** Entraînement électrique (30) selon l'une quelconque des revendications 1 à 8, le dispositif de stockage d'énergie primaire (10) comprenant un condensateur de liaison CC (42) et l'unité de réponse d'urgence comprenant le hacheur de frein (54), configuré pour court-circuiter électriquement une borne positive (38) et une borne négative (40) du condensateur de liaison CC (42) en utilisant une résistance de dérivation.

**10.** Entraînement électrique (30) selon l'une quelconque des revendications 1 à 9, le moteur CA (32) comprenant au moins un parmi un moteur à commutation électrique, un moteur à excitation à champ permanent, et un moteur synchrone à aimants permanents (PMSM).

**11.** Procédé de commande d'un entraînement électrique (30), comprenant :

- dans un mode de fonctionnement normal M1, la commande sélective par un circuit de commande d'entraînement (16), d'au moins un de premiers commutateurs à semiconducteurs (24) et de deuxièmes commutateurs à semiconducteurs (26) d'un premier demi-pont (44) et d'un deuxième demi-pont (46) d'un circuit onduleur (10), respectivement, pour commander un moteur CA (32) avec des aimants permanents de l'entraînement électrique (30) ;
- la surveillance, par un circuit de commande d'urgence (18) de l'entraînement électrique (30), de la fourniture de signaux de commande par le circuit de commande d'entraînement (16), le circuit de commande d'urgence (18) restant passif pendant un fonctionnement normal du circuit onduleur (10) ; et
- en cas de détection de défaillance du circuit de commande d'entraînement (16) pendant un fonctionnement normal, la commutation de l'entraînement électrique (30) dans un mode de fonctionnement de court-circuit actif, ASC, M2, le circuit de commande d'urgence (18) prenant en charge la commande du circuit onduleur (10), comprenant :

  ∘ l'activation d'une unité de réponse d'urgence comprenant un dispositif de freinage et/ou un hacheur de frein et/ou un relai d'isolement, l'unité de réponse d'urgence ayant un temps d'activation prédéterminée, le circuit de commande d'urgence (18) agissant plus rapidement que l'unité de réponse d'urgence relativement lente ;

∘ la protection rapide d'un dispositif de stockage d'énergie primaire (12) de l'entraînement électrique (30) pendant le temps d'activation prédéterminé au début de la condition anormale en activant sélectivement tous les premiers commutateurs à semiconducteurs (24) pour court-circuiter électriquement des lignes de phases (28) du moteur CA (32) et désactivant tous les deuxièmes commutateurs à semiconducteurs (26), une tension de commande court-terme VGSelevated étant fournie à des grilles de commande (48) des premiers commutateurs à semiconducteurs (24) et une tension de désactivation VGSoff étant fournie aux grilles de commande (48) des deuxièmes commutateurs à semiconducteurs (26), la tension de commande court-terme VGSelevated correspondant à une tension transitoire maximale VGSmax spécifiée pour les premiers commutateurs à semiconducteurs (24) et les deuxièmes commutateurs à semiconducteurs (26).

12. Procédé selon la revendication 11, comprenant en outre :

- l'isolement ou le court-circuitage électrique du dispositif de stockage d'énergie primaire (12) connecté à un côté primaire du circuit onduleur (10) pendant le mode ASC M2.

13. Procédé selon la revendication 12, le dispositif de stockage d'énergie primaire (10) comprenant une batterie rechargeable (31), l'unité de réponse d'urgence comprenant au moins un relai d'isolement électromécanique, et le procédé comprenant spécifiquement :

- l'isolement électrique de la batterie rechargeable (31) de la pluralité d'étages de commutation (14) en utilisant le relai d'isolement électromécanique.

14. Procédé selon la revendication 12 ou 13, le dispositif de stockage d'énergie primaire (10) comprenant un condensateur de liaison CC (42), l'unité de réponse d'urgence comprenant un hacheur de frein (54), et le procédé comprenant spécifiquement :

- le court-circuitage électrique, par le hacheur de frein (54), d'une borne positive (38) et d'une borne négative (40) du condensateur de liaison CC (42) en utilisant une résistance de dérivation.

15. Véhicule électrique comprenant l'entraînement électrique (30) selon l'une quelconque des revendications 1 à 10.

Fig. 1

Fig. 2

## Fig.3

### Output characteristics 175°C

* VGS=15V

--- VGS=19V

## Fig.4

### ASC Energy @ 1800A, 10ms, 175°C

VGS=15V
*

—
VGS=19V

Fig. 5

## REFERENCES CITED IN THE DESCRIPTION

### Patent documents cited in the description

- EP 0742637 A1
- CN 109130864 A
- US 2019137347 A1
- WO 2011139269 A1
- US 2013181731 A1
- US 2017093323 A1
- EP 2747260 A2
- US 2009001915 A1
- CN 108075622 A
- DE 102010006525 A1
- US 10389262 B2
- EP 3496249 A1
- EP 3496250 A1
- US 9548675 B2
- US 10622933 B2
- JP 2020198764 A
- CN 112627994 A